## Europäisches Patentamt
## European Patent Office
## Office européen des brevets

(11) Veröffentlichungsnummer: **0 167 579**
**B1**

## EUROPÄISCHE PATENTSCHRIFT

(45) Veröffentlichungstag der Patentschrifft:
21.03.90

(21) Anmeldenummer: 85900461.6

(22) Anmeldetag: 21.12.84

(86) Internationale Anmeldenummer:
PCT/EP 84/00423

(87) Internationale Veröffentlichungsnummer:
WO 85/03135 (18.07.85 Gazette 85/16)

(51) Int. Cl. ⁵: $G\ 01\ W\ 1/00$, $G\ 08\ B\ 19/02$, $F\ 25\ D\ 21/02$, $B\ 64\ D\ 15/20$

(54) MESSONDE ZUM FESTSTELLEN VON EIS ODER SCHNEEBILDUNG.

(30) Priorität: 30.12.83 DE 3347650
19.03.84 DE 3410052

(43) Veröffentlichungstag der Anmeldung:
15.01.86 Patentblatt 86/03

(45) Bekanntmachung des Hinweises auf die Patenterteilung:
21.03.90 Patentblatt 90/12

(84) Bennante Vertragsstaaten:
FR GB NL

(56) Entgegenhaltungen:
EP-A-0 067 523
DE-A-2 746 342
US-A-3 517 900
US-A-4 333 004

(73) Patentinhaber: MEYER, Friedhelm
Hof Geisenberg 1 11 Alertshausen
D-5920 Bad Berleburg (DE)

(72) Erfinder: MEYER, Friedhelm
Hof Geisenberg 1 11 Alertshausen
D-5920 Bad Berleburg (DE)

(74) Vertreter: Klingseisen, Franz, Dipl.-Ing.
Dr. F. Zumstein sen. Dr. E. Assmann Dr. R.
Koenigsberger Dr. F. Zumstein jun. Dipl.-Ing. F.
Klingseisen Bräuhausstrasse 4
D-8000 München 2 (DE)

## Beschreibung

Die Erfindung betrifft eine Vorrichtung nach dem Oberbegriff des Anspruchs 1.

Eine Vorrichtung dieser Art ist aus EP-A 0 067 523 bekannt, wobei ein elektrischer Widerstand periodisch an eine Spannung für eine bestimmte Zeiteinheit angeschlossen und dann der Widerstandswert dieses Widerstandes gemessen wird. Die Größe der Widerstandsänderung während dieses Zeitintervalls wird dann für die Bewertung verwendet, ob Eis oder Schnee vorhanden ist. Die DE-A 2 746 342 beschreibt einen Meßfühler mit einem Kaltleiter, wobei Vereisen des Meßfühlers verhindert werden soll. Dies wird durch den Kaltleiter erreicht, dessen Temperatur bei beginnender Vereisung abnimmt, wodurch der Widerstand des Kaltleiters fällt, so daß ein erhöhter Stromverbrauch ausgelöst wird, der ausreicht, um das Eis zu schmelzen. Schließlich ist aus US-A 4 333 004 ein Gerät mit einem Sensordraht und einem Referenzdraht bekannt, wobei der Referenzdraht dauernd an einer bestimmten Spannung liegt, während durch den Sensordraht kurze Impulse einer höheren konstanten Spannung geleitet werden. Hierdurch wird der Sensordraht während dieser Spannungsimpulse schnell aufgeheizt. Der Stromfluß durch den Sensordraht während dieser Aufheizperiode wird mit dem Stromfluß durch den Referenzdraht während der gleichen Zeitperiode verglichen, und wenn die Differenz zwischen diesen beiden verglichenen Werten einen bestimmten Betrag übersteigt, so wird ein Signal für Eisbildung abgegeben. Sensor- und Referenzdraht wirken unabhängig voneinander, damit ihre Widerstandswerte verglichen werden können.

Der Erfindung liegt die Aufgabe zugrunde, eine Vorrichtung der eingangs angegebenen Art so auszubilden, daß eine zuverlässige und exakte Eismeldung abgegeben wird.

Diese Aufgabe wird erfindungsgemäß durch die Merkmale im Kennzeichen des Anspruchs 1 gelöst. Wenn der Kaltleiter aufgrund von Eisbildung den Heißleiter, der die Funktion eines Temperaturfühlers bzw. einer auf eine eingestellte Temperatur ansprechenden Schalteinrichtung hat, nicht mehr derart aufheizen kann, daß diese Schalteinrichtung bzw. der Heißleiter den oberen Schaltpunkt, d. h. eine höhere Temperatur innerhalb einer vorgegebenen Zeit erreicht, so dient dies als Signal für Eisbildung. Der Kaltleiter dient dabei als selbstregulierendes Heizelement, das in Wärmeleitkontakt mit dem Heißleiter als Temperaturfühler steht. Ist die Vorrichtung von Luft umgeben, so heizt der Kaltleiter den Heißleiter auf, so daß dieser bei Erreichen einer bestimmten Temperatur die Spannungszufuhr zum Kaltleiter unverzüglich abschaltet. Bei einer Eis- oder Schneebildung am Kaltleiter wirkt dieser jedoch nur noch in geringem Maße auf den Heißleiter ein, da der Kaltleiter durch verstärkten Wärmeentzug zwar hochheizt, aber durch seine Selbstregulierung eine bestimmte obere Temperatur nicht überschreitet. Der Heißleiter erreicht dadurch die bestimmte Temperatur, bei der er die Spannungszufuhr zum Kaltleiter abschaltet, nicht, so daß die Spannungsversorgung des Kaltleiters aufrechterhalten bleibt. Hierdurch ist zuverlässig eine Eis- oder Schneebildung feststellbar. Die Vorrichtung kann einen sehr robusten Aufbau haben und sie arbeitet unter den unterschiedlichsten Bedingungen außerordentlich zuverlässig, wie dies Versuche ergeben haben.

Vorteilhafte Ausgestaltungen der Erfindung sind in den weiteren Ansprüchen angegeben.

Beispielsweise Ausführungsformen der Erfindung werden nachfolgend anhand der Zeichnung näher erläutert. Es zeigen

Fig. 1 ein Schaltbild der Vorrichtung, und
Fig. 2 eine schematische Darstellung einer Ausführungsform des Fühlers.

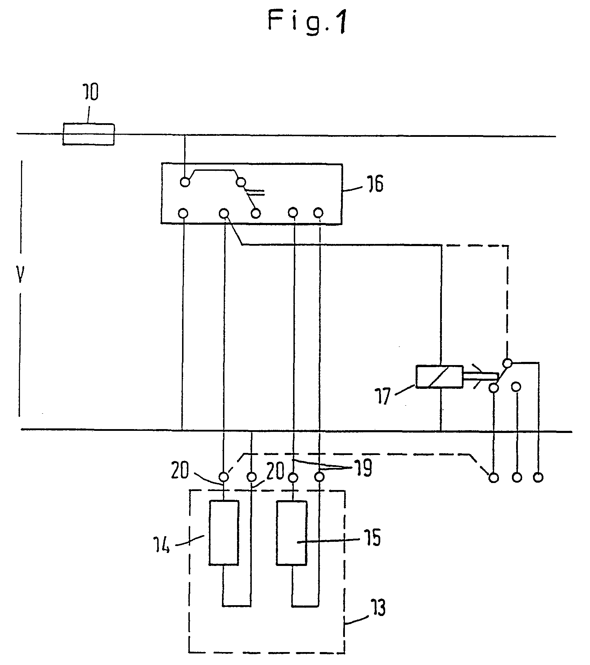

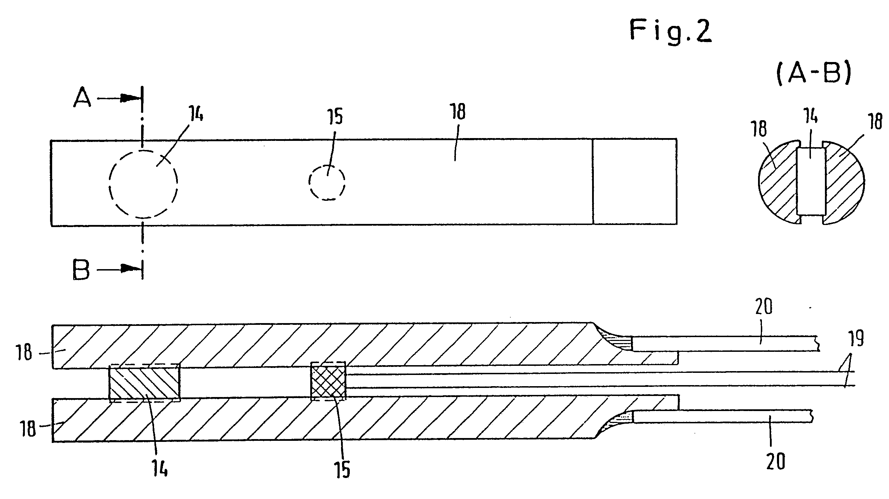

Fig. 1 zeigt ein Schaltbild einer Meßsonde mit einfachem Aufbau, die mit geringen Kosten verbunden ist und sehr genau arbeitet. Der Fühler ist mit 13 bezeichnet, und er wird durch einen Kaltleiter 14 (PTC-Widerstand) und einen diesem zugeordneten Heißleiter 15 (NTC-Widerstand) gebildet, wobei die beiden Leiter 14 und 15 in Wärmeleitkontakt miteinander stehen, wie dies Fig. 2 zeigt. Der Kaltleiter 14 ist über einen Regelthermostat 16 zwischen die elektrischen Versorgungsleitungen geschaltet, in denen eine Sicherung 10 liegt. Der Regelthermostat 16 wird über den Heißleiter 15 ein- und ausgeschaltet. Ein verzögert ansprechendes Zeitrelais 17 ist gleichfalls über den Regelthermostat 16 zwischen die Versorgungsleitungen geschaltet. Über den Kontakt des Zeitrelais 17 erfolgt die Abgabe des Meldesignals für die Eis- und Schneebildung. Das Zeitrelais kann auf eine Ansprechverzögerungszeit von 1 bis 10 Minuten eingestellt sein, während der Regelthermostat 16 für einen Temperaturbereich von + 5°C bis -30°C mit einem Schaltbereich von 1 bis 10°C ausgelegt sein kann.

Der Heißleiter 15 schaltet nach Erreichen einer bestimmten, vorher festlegbaren und von Hand einstellbaren Temperatur den Regelthermostat 16 und über diesen die Spannungszufuhr zum Kaltleiter 14 ein. Ist der Fühler 13 von Luft umgeben, so heizt der Kaltleiter 14 den Heißleiter 15 auf, so daß dessen Temperatur ansteigt und beispielsweise innerhalb von 1,5 Minuten einen Wert erreicht, bei dem der Heißleiter 15 den Thermostat 16 und damit die Spannungsversorgung des Kaltleiters 14 wieder abschaltet.

Wenn das verzögert ansprechende Zeitrelais 14 beispielsweise auf 3 Minuten eingestellt ist, hat es seinen Signalkontakt noch nicht durchgeschaltet, da es nur für ca. 1,5 Minuten mit Spannung versorgt wurde.

Bei Eis-, Schnee- oder Reifbildung wird dem Kaltleiter 14 mehr Wärme entzogen, so daß er nur noch in verringertem Maße den Heißleiter 15 erwärmen kann. Bei einer entsprechend hohen Schaltdifferenz des Regelthermostat 16 von beispielsweise 8°C reicht die Heizleistung des Kaltleiters 14 nicht mehr aus, um den Heißleiter 15 auf die Temperatur zu bringen, bei der er den Regelthermostat 16 abschaltet. Dafür ist entscheidend, daß der Kaltleiter 14 durch verstärkten Wärmeentzug zwar hoch heizt, aber aufgrund seiner Selbstregulierung eine gewisse obere Grenztemperatur nicht überschreitet. Der Heißleiter 15 bleibt somit solange wirksam, solange Eis und Schnee vorhanden sind.

Wenn der Fühler 13 wieder von Luft umgeben ist, werden über den Heißleiter 15 im vorgegebenen Temperaturbereich unter der Schalttemperatur über das Zeitrelais ständig erneut Messungen vorgenommen. Erst wenn die Umgebungstemperatur beispielsweise witterungsbedingt weiter ansteigt, schaltet der Heißleiter 15 die Meßsonde ab.

Bei einer Ausführungsabwandlung, die durch gestrichelte Linien in Fig. 1 wiedergegeben ist, ist der Kaltleiter 14 nicht direkt, sondern über den Ruhekontakt des Zeitrelais 17 mit dem Thermostat 16 verbunden und über diesen zwischen die Versorgungsleitungen geschaltet. Bei dieser Schaltung wirkt der Thermostat 16 aufgrund seiner hohen Temperaturschaltdifferenz als Temperaturbegrenzer beim Abtauvorgang.

Fig. 2 zeigt ein Ausführungsbeispiel eines Fühlers 13 in einem Längsschnitt, einem Querschnitt und in einer Draufsicht. Der Kaltleiter bzw. PTC-Widerstand 14 ist in einem geringen Abstand von dem Heißleiter bzw. NTC-Widerstand 15 zwischen zwei Metallstreifen 18, die beispielsweise aus Messing bestehen können, angeordnet, über welche die beiden Leiter 14 und 15 in Wärmeübertragungskontakt miteinander stehen. Mit 19 sind die zum Heißleiter 15 und mit 20 die zum Kaltleiter 14 führenden Leitungen bezeichnet. Zum Einspannen der beiden Leiter 14 und 15 zwischen den Metallstreifen 18 kann die Meßsonde von einer Hülse umgeben sein.

Bei einer praktischen Ausführungsform einer Meßsonde zur Überwachung von Eis-, Schnee- oder Reifbildung z. B. in einem Verdampfer einer Kältemaschine oder in einem Kühlraum wird der Thermostat 16 auf eine Temperaturdifferenz von beispielsweise 10°C eingestellt, wobei die untere Temperatur den Einschaltpunkt und die obere Temperatur den Ausschaltpunkt für die Spannungsversorgung des Kaltleiters 14 darstellt. Dieser Temperaturbereich ist wählbar. Der Heißleiter 15 wird beispielsweise in Abständen von einer Stunde eingeschaltet, um eine Eisbildung abzufragen. Die herrschende Temperatur am Einschaltpunkt von beispielsweise -30°C in einem Verdampfer wird gespeichert. Es wird eine zweite Abfragezeit von beispielsweise 3 Minuten vorgegeben. Wird innerhalb dieser zweiten Abfragezeit der Heißleiter 15 um 10°C vom Kaltleiter 14 aufgeheizt, so wird die Spannungsversorgung des letzteren durch den Heißleiter 15 abgeschaltet. Wird dagegen aufgrund eines verstärkten Wärmeentzugs am Kaltleiter 14 durch Eis der Heißleiter 15 innerhalb der zweiten Abfragezeit nicht um 10°C von der gespeicherten Temperatur aus erwärmt, so wird ein Signal für Eisbildung abgegegeben, worauf eine Abtaueinrichtung eingeschaltet oder auch nur eine Warnung abgegeben werden kann.

Nach Abschalten des Kaltleiters 14 bei Eismeldung und Einschalten einer Abtauheizung bleibt nach einer zweckmäßigen Ausgestaltung der Heißleiter 15 eingeschaltet, um die Endtemperatur bzw. den Abschaltpunkt der Abtauheizung festzulegen.

Nach Abschalten der Abtauheizung bleibt der Heißleiter 15 weiterhin eingeschaltet, um den Lüfter eines Verdampfers in einer Kältemaschine einzuschalten. Wenn in bestimmter Zeit bei Betrieb des Lüfters und der Kältemaschine eine vorbestimmte Temperatur nicht erreicht wird, wird ein Störsignal abgegeben. Auf diese Weise wird eine Leistungsmessung über den Zustand der Kälteanlage erreicht.

Ein derartiges Gerät kann die gesamte Temperaturregelung eines Kühlraumes übernehmen bzw. in eine übliche Temperaturregelung eingeschaltet werden. Bei der Ausführungsform nach Fig. 1 kann ein Fühlerbruch dadurch festgestellt werden, daß der Widerstand des Heißleiters praktisch unendlich wird, während bei einem Kurzschluß der Widerstand nahe Null ist.

Bei der Anordnung nach Fig. 2 können die Leiter 14, 15 durch Kleben oder Löten auf einem Trägermaterial guter Wärmeleitfähigkeit oder auch durch Preßkontakt mittels Federkraft, Druckverschraubung, Nietung, über eine Schrumpfhülle oder dergl. festgelegt werden. Durch Variation des Abstandes zwischen Heißleiter 15 und Kaltleiter 14 können die Schaltzeiten in Bezug auf die Ansprechtemperatur in weiten Bereichen eingestellt werden. In entsprechender Weise kann die Wärmeleitfähigkeit des Trägermaterials 18 durch entsprechende Materialwahl beeinflußt werden.

Bei der Anordnung der Meßsonde in einem Verdampfer wird ein geringer Abstand zwischen Oberfläche des Fühlers und Verdampferoberfläche vorgesehen. Dadurch werden vorzeitige Wärmebrücken verhindert, die zu fehlerhaften Signalen führen. Erst bei Reifbildung erfolgt eine verstärkte Wärmeabfuhr über die Verdampferoberfläche, wobei die Reifkristalle Wärmeleitbrücken zwischen Fühler und Verdampferlamellen bilden.

## Patentansprüche

1. Vorrichtung zum Feststellen von Eis- oder Schneebildung, insbesondere in einer Kühlanlage, mittels eines Kaltleiters (14) der mit einer elektrischen Spannungsquelle verbunden und durch eine Steuereinrichtung (16) an- und abschaltbar ist, *dadurch gekennzeichnet*, daß der Kaltleiter (14) in Wärmeleitkontakt mit einem Heißleiter (15) angeordnet ist, der bei Erreichen einer vorbestimmten Temperatur nach Aufheizen durch den Kaltleiter (14) die Spannungsversorgung des Kaltleiters (14) über die Steuereinrichtung (16) abschaltet und bei Absinken der Temperatur unter einen vorbestimmten Wert wieder einschaltet, wobei das Nichterreichen der Abschalttemperatur am Heißleiter (15) innerhalb einer vorbestimmten Zeiteinheit als Signal für Eis- oder Schneebildung dient.

2. Vorrichtung nach Anspruch 1, *dadurch gekennzeichnet*, daß ein ansprechverzögertes Zeitrelais (17) vorgesehen ist, das vom Heißleiter (15) bei Erreichen der vorbestimmten Temperatur an- und abschaltbar ist.

3. Vorrichtung nach Anspruch 2, *dadurch gekennzeichnet*, daß der Kaltleiter (14) über den Ruhekontakt des Zeitrelais (17) an die elektrischen Versorgungsleitungen angeschlossen ist.

4. Vorrichtung nach den Ansprüchen 1 bis 3, *dadurch gekennzeichnet*, daß der Kaltleiter (14) in einem geringen Abstand von dem Heißleiter (15) zwischen zwei Metallstreifen (18) angeordnet ist, welche am Kalt- und Heißleiter zur Wärmeübertragung anliegend gehalten sind.

5. Vorrichtung nach Anspruch 4, *dadurch gekennzeichnet*, daß zum Einspannen der beiden Leiter (14, 15) zwischen den Metallstreifen (18) eine diese umgebende Hülse vorgesehen ist.

**Claims**

1. Apparatus for detecting the formation of ice or snow, particularly in a refrigeration plant, by means of a PTC resistor (14) which is connected to a voltage source and is adapted to be switched on and off by a control device (16), characterized in that the PTC resistor (14) is disposed in heat-transmitting contact with an NTC resistor (15), which on reaching a predetermined temperature, after being heated by the PTC resistor (14), switches off the supply of voltage to the PTC resistor (14) with the aid of the control device (16) and switches said voltage supply on again when the temperature falls below a predetermined value, failure to reach the switch off temperature at the NTC resistor (15) within a predetermined unit of time serving as a signal indicating the formation of ice or snow.

2. Apparatus according to Claim 1, characterized in that a retarded response time relay (17) is provided which is adapted to be switched on and off by the NTC resistor (15) when the predetermined temperature is reached.

3. Apparatus according to Claim 2, characterized in that the PTC resistor (14) is connected via the normally closed contact of the time relay (17) to the electricity supply lines.

4. Apparatus according to Claims 1 to 3, characterized in that the PTC resistor (14) is disposed a short distance from the NTC resistor (15) between two metal strips (18) held in heat-transmitting contact with the PTC and NTC resistors.

5. Apparatus according to Claim 4, characterized in that in order to clamp the two resistors (14, 15) between the metal strips (18) a sheath surrounding the latter is provided.

**Revendications**

1. Dispositif pour déterminer la formation de glace ou de neige, notamment dans une installation de réfrigération, au moyen d'un conducteur froid (14) qui est raccordé à une source de tension électrique, et peut être enclenché et déclenché par un dispositif de commande (16), *caractérisé par le fait* que le conducteur froid (14) est en contact de conduction thermique avec un conducteur chaud (15) qui, lorsqu'une température prédéterminée est atteinte après réchauffage par l'intermédiaire du conducteur froid (14), interrompt l'alimentation en tension du conducteur froid (14), par l'entremise du dispositif de commande (16), et la rétablit lorsque la température chute en deçà d'une valeur prédéterminée, la non-obtention de la température de déclenchement sur le conducteur chaud (15), dans les limites d'une unité de temps prédéterminée, servant de signal pour la formation de glace ou de neige.

2. Dispositif selon la revendication 1, *caractérisé par le fait* qu'il est prévu un relais temporisé (17) à réaction différée pouvant être enclenché et déclenché, par le conducteur chaud (15), lorsque la température prédéterminée est atteinte.

3. Dispositif selon la revendication 2, *caractérisé par le fait* que le conducteur froid (14) est raccordé aux conducteurs d'alimentation électrique par l'intermédiaire du contact de repos du relais temporisé (17).

4. Dispositif selon les revendications 1 à 3, *caractérisé par le fait* que le conducteur froid (14) est disposé, à faible distance du conducteur chaud (15), entre deux lamelles métalliques (18) qui sont maintenues appliquées contre les conducteurs froid et chaud, en vue du transfert thermique.

5. Dispositif selon la revendication 4, *caractérisé par le fait* qu'une douille, ceinturant les lamelles métalliques, est prévue pour enserrer les deux conducteurs (14, 15) entre ces lamelles métalliques (18).

Fig.1

# Fig.2

EP 0 167 579 B1